# EUROPEAN PATENT SPECIFICATION

(11) **EP 4 003 682 B1**
(45) Date of publication and mention of the grant of the patent: **11.11.2026**
(21) Application number: 19773069.0
(22) Date of filing: 19.09.2019
(51) Int. Cl.: B29C 33/52, B29C 70/48, B29C 39/10, B29C 39/34, B29C 70/86, B29C 67/24, B29C 33/38, B29C 33/42, B29C 33/44, B29C 39/42, B29C 45/00, B29K 91/00

(54) **METHOD OF FORMING A DEVICE OF COMPOSITE MATERIAL**
VERFAHREN ZUR HERSTELLUNG EINER VORRICHTUNG AUS VERBUNDMATERIAL
PROCÉDÉ DE FORMATION D'UN DISPOSITIF EN MATÉRIAU COMPOSITE

(43) Date of publication of application: 01.06.2022
(60) Divisional application: 24210461.0 / 4 477 395
(73) Proprietor: Adultimum AG, 9012 St. Gallen (CH)
(72) Inventor: HÜSLER, Daniel, 9012 St. Gallen (CH); FAISST, Rainer, 72175 Dornhan (DE)
(74) Representative: Manitz Finsterwald Patent- und Rechtsanwaltspartnerschaft mbB
(86) International application number: PCT/EP2019/075253
(87) International publication number: WO 2021/052596

(56) References cited:
- EP-A1- 1 197 309
- EP-A1- 3 375 543
- DE-A1- 102009 034 724
- GB-A- 1 037 527
- GB-A- 2 015 923
- GB-A- 704 324
- IT-A1- 201600 105 326
- JP-A- H08 322 971
- JP-A- S59 198 127
- US-A- 5 651 932
- US-A1- 2017 128 792

## Description

The present invention relates to a method of forming a device of composite material during which method inserts and/or functional components are inherently embedded into said pattern and/or said device.

Composite materials are frequently used to form devices, also known as composites, that are light weight and have a high strength, to replace metal devices, such as vehicle panels, device housings etc.

Composites are further used to form lightweight stable parts, e.g. in vehicles, sports equipment, electronic applications, robotics, composite installations, tools etc., where they are used to form panels, frames, interior components, housings etc.

During the formation of such devices it is very difficult to embed functional components into the devices during their manufacture, specifically functional components with tight tolerances or components that are aligned relative to one another. This can for example be particularly relevant during the manufacture of vehicle panels, components for robots, tools and electronic applications.

Prior art methods and devices are known from IT201600105326 A1; JP H08 322917; US 2017/1238792 A1; US 5,651,932; GB704324A; JPS59192127; GB1037527; EP3375543; GB2015923; DE102009034724; and EP1197309A1.

For this reason, it is an object of the present invention to make available a method of manufacturing devices having functional components embedded therein. It is a further object to make available a device in which the functional components embedded therein are aligned relative to one another. It is yet a further object of the invention to make available a comparatively low-cost method of manufacture of such components.

This object is satisfied by a method of forming a device of composite material having the features of claim 1.

The use of patterns to form parts of a mold of a composite is well known, to produce composites with clearly defined internal structures. The general idea underlying the present invention is to embed inserts forming either the functional components or supports for the functional component directly in the removable pattern at pre-defined positions, so that these can be embedded in the composite device at said pre-defined positions. In this way also complex housing structures can be formed. The use of patterns thereby makes available a cost-efficient manufacture of composites.

In this connection the support for the functional component can be a negative shape of the functional component and can comprise undercuts recesses or the like used to connect the functional component to the composite.

Said step of holding may comprise holding the inserts through the application of vacuum, the use of sliders, functional elements and/or the use of magnets. In this way the inserts can be held in a simple and highly reproducible way.

Said inserts may comprise at least one of magnetic material and metal. Such inserts can be held in an expedient way in the mold for the pattern.

Said insert may be shaped to form a functional component or may be formed by a functional component of said device, i.e. is a functional component. In this way either a functional component or a support for the functional component can be directly embedded in said pattern and can later on be included in said device either directly or at the support formed by the insert.

Said pattern of removable material may be produced in an injection molding process or a wax casting process. Such process enable a swift and cost-effective manufacture of patterns

Said removable material is introduced into said cavity in liquid form. In this way one can ensure that the complete inner surface of the mold is covered with the removable material to produce the desired outer shape of the pattern.

Said step of introducing said removable material into said mold comprises filling between 40 and 99% of said cavity with liquid removable material. In this way shrinkage effects at the outer surface of the pattern can be minimized.

The method further comprises the step of: introducing gas into said removable material present in said mold and pressurizing said removable material present in said mold with a pressure difference between an outside of said formed pattern and a hollow space within said pattern selected in the range of 0.02 to 20 bar. In this way shrinkage effects at the outer surface of the pattern can be even further minimized.

The method may further comprise the step of: applying a pressure selected in the range of 0.02 to 0.95 bar, in particular 0.05 to 0.5 bar in said cavity prior to the introduction of the removable material into said cavity. In this way a pattern can be expediently formed having an outer surface that is at least substantially free of defects.

The method further comprises the step of: moving said mold to completely coat the inner surface of the mold with said removable material in liquid form; and solidifying the removable material in said mold. Due to the centrifugal force respectively gravity acting on the removable material one can further prevent shrinkage effects at a surface of the pattern and thereby obtain a pattern in which the inserts have been reliably placed at the pre-defined position at the outer surface of the pattern for forming a functional component at the pre-defined position at the inner surface of a device.

The method may further comprise the step of covering said pattern having the inserts with one or more layers of webs of fiber material. By way of covering the pattern with the one or more layers of webs of fiber material a composite device having an inner shape corresponding to the outer shape of the pattern can be formed.

In this connection it should be noted that the pattern may be used as part of a mold for a so-called resin transfer molding (RTM) process. In this case, the mold may then be covered with roving following which it may be inserted into a further mold for the addition of resin and heat treatment to form the final device of composite material in a manner known per se.

In this connection it should be noted that each web of fiber material may be a layer of fabric made from woven fibers that are made by interlacing two or more tows of fibers at right angles to one another. Additionally, or alternatively the web of fiber material may be formed by a tow of fibers. In this connection a tow of fibers is a bunch of fibers like a yarn.

In this connection it should further be noted that tows of fibers may be applied at the positions of the inserts to reinforce the inserts in the completed device, whereas woven fabric can be introduced on areas representing an inner and/or outer surface of the device.

The one or more layers of fiber material may comprise carbon fibers, glass fibers, basalt fibers, natural fibers, such as wood fibers, and hemp fibers, aramid fibers, polyester fibers, in dry condition or as prepreg. Such fibers can be beneficially used in the formation of composite devices. In this connection it should be noted that a prepreg is a layer of fibers which comprise an adhesive.

The method may further comprise the step of placing said pattern having inserts and covered with said one or more layers of fiber material into a further mold. In this way the one or more layers of webs of fiber material can be held in a further mold between the pattern and an inner surface of the further mold to form a pre-defined inner and outer shape of the device by way of the one or more layers of fiber material.

The method may further comprise the step of heating the further mold to first, second and/or third temperatures in first, second and/or third temperature ranges. By selecting the appropriate heating step, the resin can be transported to its desired position within the mold, the resin can be cured within the mold around the one or more layers of fiber material and the removable material can be removed from said mold.

The first, second and third temperatures may be used for at least one of heating the mold to aid the introduction of resin into the mold, heating said mold for curing the material of said device to be formed, and removal of the removable material of the pattern, such as a wax.

It should also be noted that the first temperature range is preferably a temperature range of ± 3° centered about the desired first temperature. The first temperature is preferably selected between 30 and 85°C, especially between 50 and 80°C.

It should also be noted that the second temperature range is preferably a temperature range of ± 3° centered about the desired second temperature. The second temperature is preferably selected between 60 and 105°C, preferably between 70 and 95°C. In this connection it should be noted that one can also adapt the temperature gradually over the complete temperature range in a step wise manner.

It should also be noted that the third temperature range is preferably a temperature range of ± 3° centered about the desired third temperature. The third temperature is preferably selected between 80 and 130°C, preferably between 95 and 120°C.

The method may further comprise the step of introducing a resin into said further mold prior to and/or during said step of heating of said mold to said first temperature, optionally wherein a vacuum is applied during said step of curing said resin. By applying temperature and/or a vacuum the resin can have runnier consistency than at room temperature and thereby flows better into voids between the one or more layers of fiber material arranged between the pattern and the inner surface of the cavity. By introducing a resin into said further mold to coat the one or more layers of webs of fiber material in the space between an inner surface of the further mold and an outer surface of the pattern, one can form the composite device having the desired inner and outer shape with functional components inherently formed in the wall of the device at the position of the inserts present in the pattern.

The method may further comprise the step of curing said resin in said further mold to form said device, wherein said step of curing comprises at least one of the application of heat and UV light. By way of such method steps the removable material can be beneficially cured.

The step of the application of heat may comprise heating said further mold to said second temperature. This is a swift and efficient way of curing the resin at the one or more layers of webs of fiber material.

The resin may be heated to the second temperature, e.g. below a curing temperature of said resin on the introduction of said resin into said further mold. In this way the resin can be transported more efficiently around the one or more layers of webs of fiber material present in the further mold in order to avoid the inclusion of air bubbles which might degrade the quality of the housing at the position of the air bubble.

The resin may be one of a one-component resin, a two-component resin comprising a hardener, and a multi-component resin comprising one or several hardeners. The resin may comprise a resin on an epoxy basis, a resin on a polyurethane basis, a resin on a cyanate ester or another basis suitable for injection or infusion. Such resin can be beneficially used in the formation of composite devices.

The method may further comprise the step of removing said removable material from said device. In this way one can remove the pattern without destroying the composite device. The method may further comprise the step of heating said further mold to the third temperature. By heating the removable material to a temperature above the melting point of the removable material allows a swift removal of the removable material.

In this connection it should be noted that the third temperature step can be conducted in a further device such as an oven or furnace.

According to an example not part of the present invention a pattern of removable material is provided, optionally obtainable by a method described herein, the pattern comprising one or more inserts placed at one or more predefined positions along an outer surface of said pattern. Such patterns can be beneficially used during the manufacture of composite devices.

Said pattern of removable material has a melting point selected in the temperature range of 80 to 130°C, preferably in the range of 95 to 120°C. Said pattern of removable material may remain stable in shape to temperatures selected in the range of 60 to 100°C, preferably in the range of 70 to 95°C. Said pattern of removable material may remain stable in shape at temperatures below a melting point of said removable material. Such properties of the pattern make it particularly suitable for low-cost but high accuracy production of composite devices.

According to a further example not being part of the present invention a device of composite material is provided, optionally obtainable by a method described herein, comprising one or more functional components placed at one or more predefined positions along an inner surface of said pattern, with said functional components either being integrally formed in one piece with said device, or embedded within a structure integrally formed in one piece with said device.

The functional component may be selected from the group of members consisting of a tappet with an undercut, a pocket with an undercut, an internal seat (cylindrical), a bearing seat optionally with points of insertion for a circlip, a t-shaped groove (outwardly shaped and inwardly shaped), outer threads, such as bolts or studs with outer threads, inner threads such as sleeves with an inner thread or a nut, bayonet connections, open wedge sockets, eyelets, ball studs, dowels and dowel pins both optionally with points of insertion for a circlip, hooks, spring elements, bearing blocks, bearing blocks with clamping, saw tooth pins/ couplings with or without bores, sleeves, apertures, supports for one or more of the foregoing and combinations of the foregoing

Said device has a pre-definable wall thickness with a tolerance of the wall thickness lying in the range of ± 0.5 mm, in particular of ± 0.1 mm, especially of ± 0.05 mm, for a wall thickness selected in the range of 1 to 4 mm, in particular for a length of material of said device cut from said device in the range of 1 to 5 cm and at a width selected in the range of 0.5 to 2.5 cm. Using prior art molds such tolerances are not possible for hollow devices.

Said device may have a tolerance of the wall thickness lying in the range of ± 0.3 mm, especially of ±0.2 mm, very preferably of less than 0.05 mm, for a wall thickness selected in the range of 1 to 4 mm.

Said device may have a tolerance of the surface profile of ± 0.1 mm. In this way devices having particularly smooth surfaces can be achieved by means of the present teaching.

In this connection it should be noted that the tolerance of the surface profile is a standard measurement technique used to define the surface quality of objects. The more uniform the surface is, the lower its tolerance is. The surface profile is defined by a uniform boundary around a surface within which the elements of the surface must lie. The surface profile is a complex tolerance that simultaneously controls a feature's form, size, orientation, and sometimes location. The surface profile is a three-dimensional tolerance that applies in all directions regardless of the drawing view where the tolerance is specified. It is usually used on parts with complex outer shape and a constant cross-section like extrusions.

To measure the tolerance of a surface profile two planes are placed around the surface whose tolerance profile is to be measured and the tolerance is defined by the spacing between the planes that are placed around the surface.

Said device may have a tolerance of the surface profile of ± 0.05 mm, in particular of ± 0.03 mm, especially of ± 0.01 mm at the position of the functional component forming a second insert. Such a device has a particularly smooth surface.

Two or more inserts may be provided and an angular tolerance of positioning between the two inserts in said device may be less than 0.3°, preferably less than 0.2°, if the two or more inserts are fixed relative to one another in the pattern then the angular tolerance between the two inserts may be less than 0.1°, preferably less than 0.05°. Two or more inserts may be provided and an axial tolerance of positioning between the inserts in said device may be less than 0.2 mm, preferably less than 0.1 mm, if two or more inserts are provided and are fixed relative to one another in the pattern then the axial tolerance between the two inserts may be less than 0.1 mm, preferably less than 0.05 mm. Two or more inserts may be provided and a tolerance of positioning between the inserts at a spacing between the inserts in said device may be less than 0.1 mm + 1 mm/m, preferably less than 0.05 mm + 0.5 mm/m, if the two or more inserts are fixed relative to one another in the pattern then the positioning tolerance between the two inserts may be less than 0.05 mm + 0.5 mm/m, preferably less than 0.05 mm + 0.2 mm/m

The device may be a head of a golf club and the one or more functional components may be selected as at least one of a weight integrated into the golf club, a shaft connector insert forming a connector to a shaft of the golf club, and a surface acting as a face of the golf club. Using the above described method a golf club with a very favorable weight distribution can be made.

One or more functional components may be provided that act as one or more weights of the head, one functional component may be provided that acts as the shaft connector insert and one functional component may be provided that acts as the face of the head of the golf club. In this way one or more weights can be formed separate from the face and one thereby yields a particularly favorable weight distribution within the head of a golf club. In this connection it should be noted that heads for both irons and woods can be formed in this way, especially using the method described herein. By embedding a shaft connector insert an angular precision of the face relative to the shaft position can be increased in comparison to prior art golf clubs.

Further embodiments of the invention are described in the following description of the Figures and the dependent claims attached to this specification. The invention will be explained in the following in detail by means of embodiments and with reference to the drawing in which is shown:
- Fig. 1: a perspective view of functional components placed at one or more predefined positions along an inner surface of a device;
- Fig. 2: a part schematic sectional side view of a mold for forming a pattern for a device showing various inserts;
- Fig. 3: a part schematic sectional side view of a mold for forming a pattern for a device showing inserts present in the mold;
- Fig. 4: a part schematic sectional side view of a mold for forming a pattern for a device with removable material filed in the device around said inserts;
- Fig. 5: a sectional view similar to that of Fig. 4, with the pattern having the inserts embedded therein removed from said mold;
- Fig. 6: a sectional view similar to that of Fig. 5, with the pattern having been covered with layers of fiber material;
- Fig. 7: a sectional view similar to that of Fig. 6, with the covered pattern having been placed into a further mold;
- Fig. 8: a sectional view similar to that of Fig. 7, with the space around the layers of fibers between the pattern and an internal surface of the further mold filled with a resin;
- Fig. 9: a sectional view similar to that of Fig. 8, with the device having been removed from the further mold;
- Fig. 10: a sectional view similar to that of Fig. 9, with the pattern having been removed from said device;
- Fig. 11: a sectional view similar to that of Fig. 10, with the inserts having been removed from said device;
- Fig. 12: a sectional view similar to that of Fig. 10, with a further type of functional component inherently present at the inner surface of said device;
- Fig. 13: a sectional view similar to that of Fig. 10, with a further type of functional component inherently present at the inner surface of said device;
- Fig. 14: a sectional view similar to that of Fig. 10, with a further type of functional component inherently present at the inner surface of said device, with said further type of functional component being the insert which was previously embedded within the pattern;
- Fig. 15: a sectional view similar to that of Fig. 14, with a further type of functional component inherently present at the inner surface of said device, with said further type of functional component being the insert which was previously embedded within the pattern;
- Fig. 16: a schematic view of internal components of a device in which bearing supports are integrally formed in one piece with said device;
- Fig. 17: a view of a head of a golf club; and
- Fig. 18: a view of a pattern for a head of a golf club.

In the following the same reference numerals will be used for parts having the same or equivalent function. Any statements made having regard to the direction of a component are made relative to the position shown in the drawing and can naturally vary in the actual position of application.

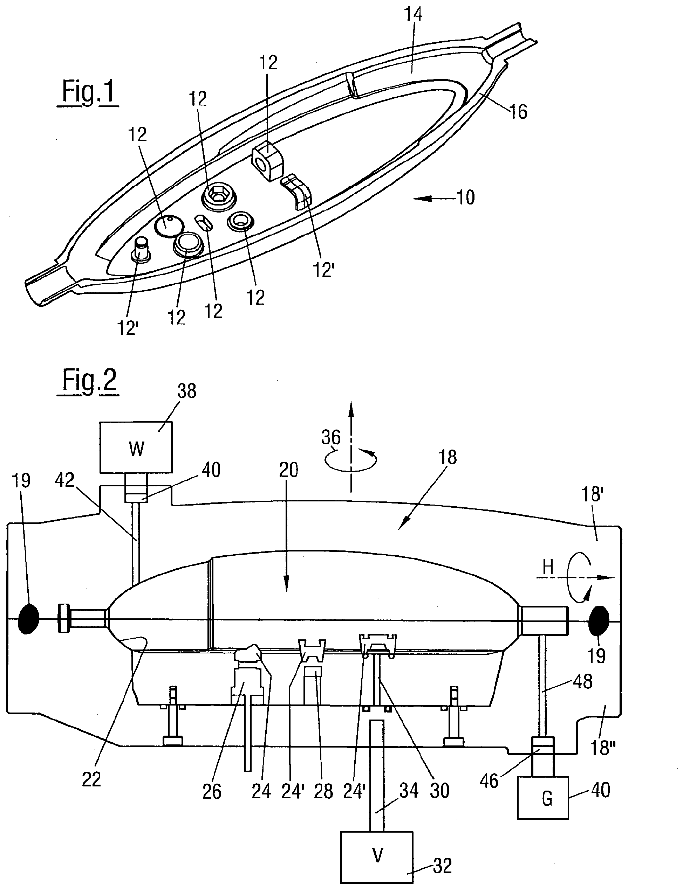

Fig. 1 shows a perspective view of functional components 12, 12' placed at one or more predefined positions along an inner surface 14 of a housing 16 of a device 10. The functional components 12 can either be formed by and in the housing 16 of the device 10 itself. Alternatively the functional components 12' can be supported directly within the housing 16 of the device 10 by supports formed within the housing 16.

The functional components 12' shown in Fig. 1 are a hook 12' and bolt 12' which are formed by inserts which were present in a pattern 54 for the device and have been embedded within the device 10 during the manufacture of the device 10. The supports for functional components 12 shown in Fig. 1 are a pocket 12 with an undercut, an internal seat 12 (cylindrical), a support 12 for a nut, a bearing seat 12, an inwardly t-shaped groove 12 and a sleeve 12.

The functional component or support for a functional component can be one of the following types of functional components 12, 12' which are selected from the group of members consisting of a tappet with an undercut, a bearing seat with points of insertion for a circlip, an outwardly t-shaped groove, outer threads, such as bolts or studs with outer threads, inner threads such as sleeves with an inner thread or a nut, bayonet connections, open wedge sockets, eyelets, ball studs, dowels and dowel pins both optionally with points of insertion for a circlip, spring elements, bearing blocks, bearing blocks with clamping, saw tooth pins/ couplings with or without bores, apertures, supports for one or more of the foregoing and combinations of the foregoing.

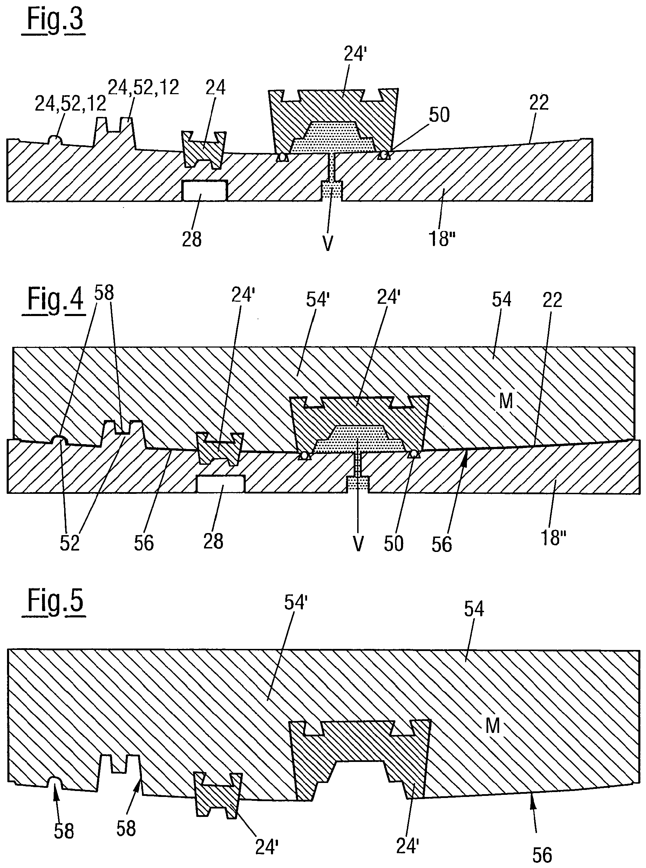

In order to form the device 10, a pattern 54 of removable material M (see Fig. 4) is initially formed in a mold 18. Fig. 2 shows a part schematic sectional side view of the mold 18 for forming the pattern 54 of the device 10. The mold comprises top and bottom halves 18', 18", which together define a cavity 20 having an inner surface 22.

A seal 19 is present between the top and bottom halves 18', 18" in order to seal off the cavity from the outside. Such seals 19 can for example be formed by an O-ring.

First and second kinds of inserts 24, 24' are arranged and held at the inner surface 22. The first kind of insert 24 is formed by structures that can be inserted into the cavity 20 via e.g. a slider 26, and thus project into the cavity prior to and during the manufacture of the pattern 54 for the device 10 to form a structure at an outer surface 56 (see Fig. 4) of the pattern 54. The structure can thereby form a recess in the pattern 54 which can be filed with a material forming the device 10.

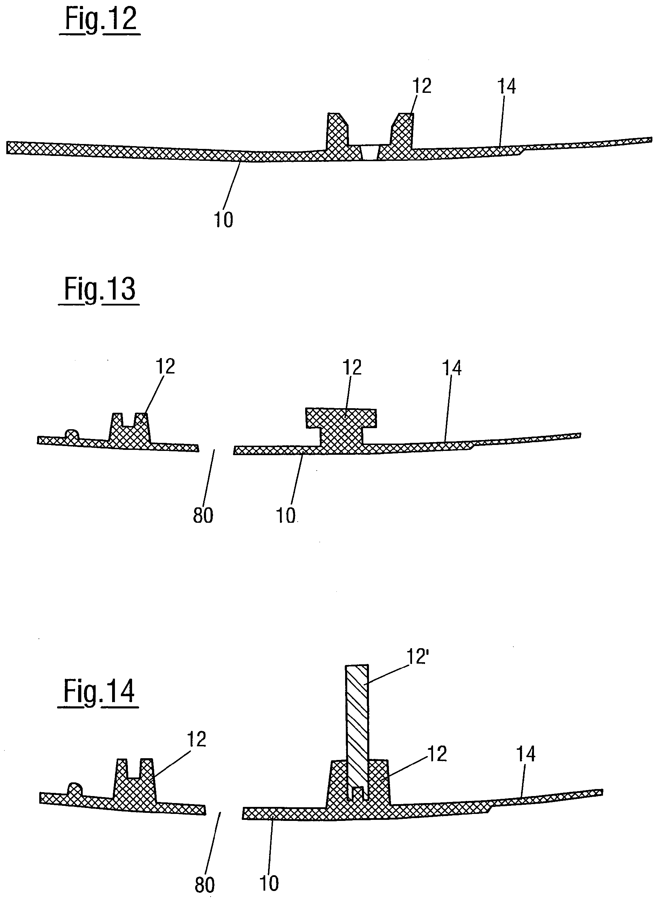

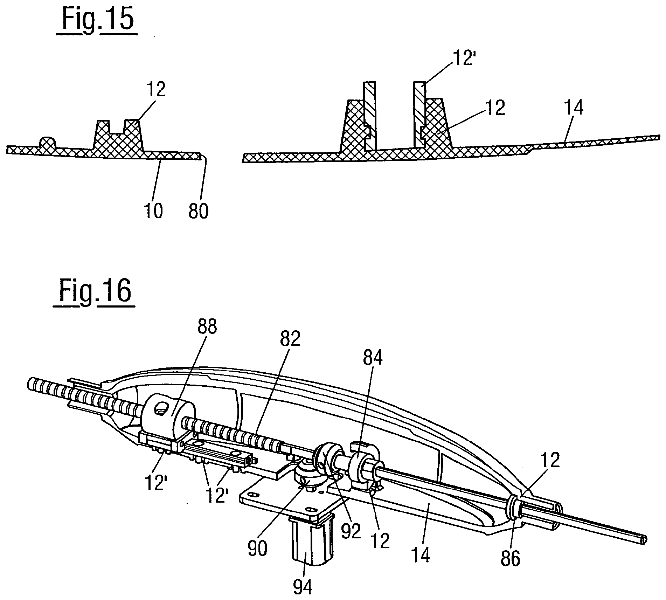

The second kind of insert 24' is an insert that is intended to remain within the pattern 54 after this has been formed. This second kind of insert 24' can likewise form structures at the outer surface 56 of the pattern 54. These structures can either form supports for the functional components 12, i.e. have a shape complementary to the functional component 12'. Alternatively the second kind of insert 24' is the functional component 12 (see Figs. 14 and 15). The functional component 12' is then bonded to the device 10 via the structures present at the outer surface 56 of the pattern 54.

The second kind of insert 24' can be held within the cavity 20 of the mold via one or more magnets 28 or through the application of a vacuum V. For this purpose, the second kind of insert 24' is connected via a vacuum passage 30 to a vacuum pump 32 that is connected to the mold 18 via a vacuum port 36.

In order to form the pattern removable material M (see e.g. Fig. 4) is introduced into the cavity 20 from a reservoir 38 of removable material which can be a wax W. The removable material M is introduced via a port 40 and a line 42 into the cavity 20 in liquid form. In fact a volume of the cavity 20 of the mold 18 is only filled to 40 to 98% with liquid removable material M.

In order to pressurize the pattern 54 a gas G can be introduced into the removable material M via a gas supply 44 which is connected to the mold 18 via a gas port 46 and a gas line 48. Additionally or alternatively, the cavity 20 is sealed off in such a **way or can** be sealed off, such that gas present in the cavity is compressed on the introduction of the removable material M to form pressurized gas G within the cavity.

As indicated in Fig. 4 in each case the gas G produces a hollow space 54' within the pattern 54. The gas can fill this cavity 54' and pressurize the removable material M present in the mold 18 such that the wax 20 covers the complete surface of the cavity 20. A pressure difference between an outside of said formed pattern 54 and the hollow space 54' within said pattern 54 is selected in the range of 0.02 to 19 bar, i.e. the pressure in the hollow interior of the wax pattern can be selected to lie in the range from 1.02 to 20 bar prior to the solidification of the wax, i.e. when the wax is in the molten state. In this connection it should be noted that the pressure in the hollow interior of the wax pattern may be less after the wax has solidified than before the wax has solidified, this is due to the shrinkage of the wax when this solidifies.

Typically the wax may be selected to be a wax molten at a higher temperature in range from 60 to 140°C, in particular 70 to 120°C and to be solid at a lower temperature in a range from 30 to 100°C, in particular 60 to 90°C. The temperature difference between the higher temperature and the lower temperature is preferably selected to be less than 40°C, preferably less than 30°C, in particular less than 20°C and especially less than 10°C.

The wax may have a viscosity of greater than 2000 mPas for a temperature of less than 85°C and a viscosity of less than 800 mPas for a temperature greater than 105°C. Such waxes have found to be particularly stable in shape up to their melting point and the transition between the liquid state and the solid state takes place over comparatively small temperature ranges making said waxes more cost effective in their use.

On forming the wax pattern 54 the mold 18 may be heated to a temperature below a solidification temperature of the wax, in particular to a temperature selected in the range of 1 to 40°C, in particular 5 to 25°C, below the solidification temperature of the wax. In this way the wax can be solidified in a more controlled manner and the shrinkage effects at the surface of the wax pattern can be reduced as the wax does not automatically solidify on contact with the surface of the mold cavity.

The mold cavity may be evacuated to a pressure selected in the range of 0.02 to 0.95 bar, in particular to a pressure selected in the range of 0.05 to 0.5 bar.

Following this the mold can be rotated about one or more axes of rotation. The first possible axis is indicated about the vertical axis 36 in which case the mold 18 can be rotated in or against the direction of the arrow indicated about the vertical axis 36. The second possible axis of rotation is about a horizontal axis H, in which case the mold 18 can be rotated in or against the direction of the arrow indicated about the horizontal axis H. By moving the mold 18 in this way the centrifugal force or gravity urges the pressurized removable material towards the inner surface 22 of the mold 18, so that this is completely coated with the removable material and the resultant pattern has an outer surface 56 (see Fig. 4) which is essentially free of shrinkage and other forms of defects. During the rotation of the mold 18 this can be cooled e.g. using water cooling bringing about a solidification of the removable materials M in the mold 18.

To form the pattern 54 having functional components 12, 12' placed at one or more predefined positions a vacuum may be applied at said mold 18 using a vacuum pump. Once the desired vacuum of e.g. 0.3 bar is achieved in the mold 18, a valve may be closed to maintain the pressure within the cavity. Thereafter a liquid form of the removable material M may be introduced into the mold 18. For example 80% of the volume of the mold 18 may be filled with liquid material M, e.g. wax W. Thereby the residual air in the mold is compressed through the addition of the wax W in such a way that the pressure in the mold may now be in the range of 1.02 to 4 bar depending on the initial vacuum pressure and the amount of wax added.

The mold 18 may then be rotated about an axis of rotation while the mold is cooled, due to the pressurized gas in the mold and the rotation of the mold, the initially liquid wax covers the complete surface of the mold such that a wax pattern can be formed having the outer shape resembling that of the inner shape of the mold, with the wax pattern having a hollow interior.

If a pattern having a particularly complex outer shape is to be formed, additional gas may be added to the mold prior to, during and/or after the addition of the liquid removable material M. Additionally or alternatively more than 80% of the volume of the cavity 20 can be filled with the removable material M. This additional pressure in the mold can guide the liquid removable material into the complex negative geometries of the mold to ensure that a pattern having an outer surface substantially free of defects can be formed.

Fig. 3 shows a part schematic sectional side view of the mold in which rather than using a moveable insert 12 that can be moved into the cavity 20, the inner surface 22 of the mold 18 comprises a projection 52 at the inner surface which takes on the function of an insert 12 to form a support structure for a functional component 12'. The second kinds of inserts 24' are inserted into the mold 18. The left hand insert 24' is held at the inner surface 22 via a magnet. The right-hand insert 24 is held in place via vacuum V, a seal 50 in the form of an O-ring seals between the mold 18 and the insert 24'.

Fig. 4 shows a part schematic sectional side view of the mold of Fig. 3 into which the removable material M has been introduced. Also visible is the hollow space 54'.

Fig. 5 shows a sectional view similar to that of Fig. 4, in which the removable material has solidified and the pattern 54 is removed from the mold 18. The inserts 24' are held at pre-defined positions within the pattern 54 at the outer surface 56. The pattern 54 further comprises recess 58 in the outer surface 56.

The pattern 54 comprises two inserts 24, 24' placed at one or more predefined positions along the outer surface 56. The pattern 54 of removable material M can have a melting point selected in the temperature range of 80 to 130°C, preferably in the range of 95 to 120°C. The pattern 54 can remain stable in shape to temperatures selected in the range of 60 to 100°C, preferably in the range of 70 to 95°C. Generally speaking the pattern 54 of removable material M can remain stable in shape at temperatures below a melting point of said removable material M.

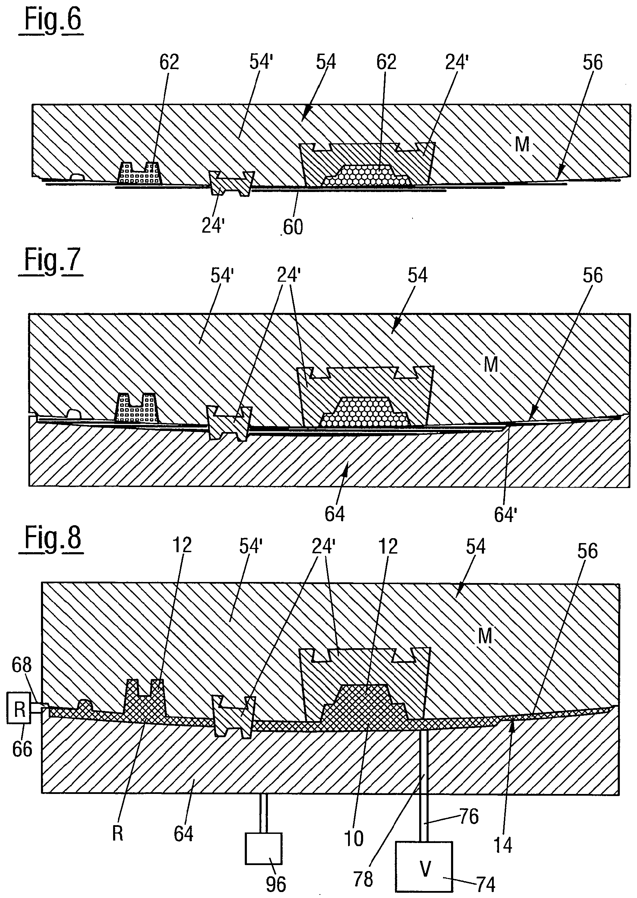

Fig. 6 shows a sectional view similar to that of Fig. 5, with the pattern 54 having been covered with layers of fiber material 60, 62. Woven layers of fiber material 60 are placed directly at the outer surface 56, whereas tows of fibers 62 have been inserted into the recess and the free spaces of the inserts accessible from the outer surface 56 of the pattern 54.

The one or more layers of fiber material 60, 62 can comprise carbon fibers, glass fibers, basalt fibers, wood fibers, hemp fibers, aramid fibers, polyester fibers, in dry condition or as prepreg.

Thus, the pattern 54 of removable material M can be used as a mold in resin transfer molding (RTM) processes to form composite devices in a manner known per se.

Fig. 7 shows a sectional view similar to that of Fig. 6, with the covered pattern 54 having been placed into a further mold 64. The further mold 64 has an internal surface 64'. The layers of fiber material 60, 62 are thus placed between the internal surface 64' of the further mold 64 and the outer surface 56 of the pattern 54.

Fig. 8 shows a sectional view similar to that of Fig. 7, with the space around the layers of fibers 60, 62 between the pattern 54 and the internal surface 64' of the further mold 64 filled with a resin R. The resin R is introduced from a reservoir 66 via a supply line 68.

The further mold 64 can be heated to first, second and/or third temperatures in first, second and/or third temperature ranges via a heating and/or cooling device 96.

In this connection it should be noted that when the further mold 64 is heated to one of the first, second and third temperatures, the heating steps may be carried out gradually in a stepwise manner or continuously.

Particularly during RTM processes, it should be noted that the composite of fiber and resin is typically heated in steps to below the glass transition temperature of the resin in order to prevent the device to be formed from becoming soft and thereby obtaining a device with a deformed outer and/or inner surface.

In this connection it should be noted that the top half 18' of the mold 18, the bottom half 18" of the mold 18 and the further mold 64 are each preferably formed from a thermally conductive and non-magnetic material, such as aluminum or an aluminum alloy.

The resin R is introduced into said further mold 64 during said step of heating of said further mold 64 to said first temperature. The resin R is heated to below a curing temperature of said resin R on the introduction of said resin R into said further mold 64. In order to enhance a flow of the resin R of runny consistency a vacuum V may be applied simultaneously via a vacuum pump 74 connected to a vacuum line 78 via a port 76.

The resin R is cured in the further mold 64 to form the device 10. The step of curing comprises heating the further mold 64 to said second temperature. The second temperature is higher than the first temperature.

The resin R can be one of a one-component resin R, a two-component resin R comprising a hardener, and a multi-component resin R comprising one or several hardeners. The resin R comprises a resin on an epoxy basis, a resin on a polyurethane basis, a resin on a cyanate ester or another basis suitable for injection or infusion.

Thus in the RTM process described in the foregoing at least one layer of roving is provided as a first layer of fiber material 60 optionally also a second layer or several layers of fiber material 62 is provided. The pattern 54 covered with the first layer of fiber material 60 and optionally also the second layer of fiber material 62 is then placed into the further mold 64. The further mold 64 is then evacuated to create a vacuum in the further mold 64. The resin R is then injected into the further mold 64 at a temperature above room temperature but below the ideal hardening temperature of the resin R possibly under pressure. The resin R at elevated temperature and which is possible pressurized is more flowable than unpressurized resin R at room temperature and hence can flow more easily through the roving and the further mold 64 in order to ensure, if possible, that no air pockets are formed in the composite material of the final device.

The resin R is then permitted to solidify, i.e. harden, at a temperature selected below the melting temperature of the wax pattern 54, preferably while gradually increasing the temperature of the mold between the boundaries of the second temperature range from the lower temperature to the higher temperature, e.g. from 90°C to 100°C. If required, openings and/or apertures can be applied at the hardened composite device. Following which the temperature of the further mold 64 is gradually increased from e.g. 100°C to 120°C in order to melt out the wax pattern 54. The melting out of the wax pattern 54 can optionally also be carried out outside the mold 64, for example in an oven.

As is known to the person skilled in the art of RTM processes, the glass transition temperature of the resin can be increased temporaily in the mold during the stepwise gradual increase in temperature to above the melting point of the wax to form the device. The liquid wax can then be removed via the openings and/or apertures applied at the device 10.

Also the inserts 24' can be removed following the removal of the liquid wax in order to enable the placement of functional components at the position where a support therefore has been formed. For example, in Fig. 16 an insert 24' forms a support for a bearing and the bearing 84 is then placed at the bearing support 12 inherently formed in the device 10.

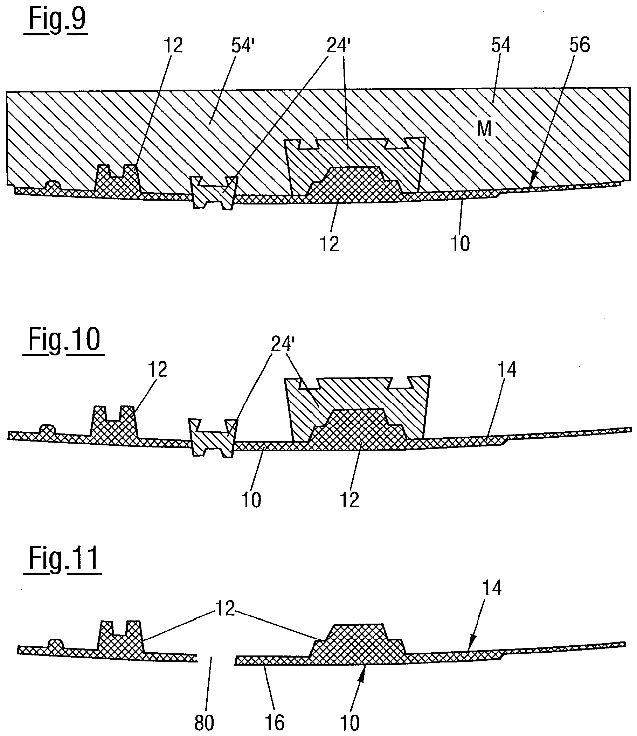

Fig. 9 shows a sectional view similar to that of Fig. 8, with the device 10 having been removed from the further mold 64. The removable material M of the pattern 54 is still present within the device 10.

Fig. 10 shows a sectional view similar to that of Fig. 9, with the pattern 54 having been removed from the device 10 due to the application of a heating step which heated the removable material M to above its melting point by heating the further mold 64 to the third temperature.

Fig. 11 shows a sectional view similar to that of Fig. 10, with the inserts 24' having been removed from the device 10. The left hand-insert in Fig. 10 was used to form an aperture 80 in the housing 16 of the device 10. The right-hand insert was used to form a support for a bearing, i.e. the bearing race can be assembled at the functional component 12 shown on the right in Fig. 11. The left-hand functional component 12 is an internal seat for a component that can cooperate with the bearing seat.

The device 10 of composite material, thus comprises two functional components 12 placed at two predefined positions along the inner surface 14 of the device 10. The functional components 12 are integrally formed in one piece with said device 10.

The device 10 can have a pre-definable wall thickness with a tolerance of the wall thickness lying in the range of ± 0. 5 mm for a wall thickness selected in the range of 1 to 4 mm, in particular for a length of material of said device 10 cut from said device 10 in the range of 1 to 5 cm and at a width selected in the range of 0.5 to 2.5 cm.

Fig. 12 shows a sectional view similar to that of Fig. 10, with a seat 12 for a nut, i.e. a component having an internal thread inherently present at the inner surface 14 of the device 10.

Fig. 13 shows a sectional view similar to that of Fig. 10, with a T-shaped groove provided as the functional component 12 inherently present at the inner surface 14 of the device 10.

Fig. 14 shows a sectional view similar to that of Fig. 10, with the functional component 12' in the form of a threaded bolt is embedded within material of the device 10 at the inner surface 14 of the device 10. The threaded bolt has been bonded into place by means of the provision of an insert surrounding said bolt 12' which held the bolt 12' in place within the pattern and which enabled a permanent bond to be formed between the bolt 12' and the device 10 during the step of curing the resin R to form the device 10. The bolt 12' is in this way integrally embedded in one piece with the device 10.

Fig. 15 shows a sectional view similar to that of Fig. 14, with a sleeve 12' having an inner thread inherently present at the inner surface 14 of the device 10. Like with the bolt 12' of Fig. 14, the sleeve 12' has been bonded to the device during the step of curing the resin R used to form the housing 16 of the device 10

Fig. 16 shows a schematic view of internal components of the device 10. The device 10 comprises a shaft 82 extending along the horizontal axis of said device 10. in which a ball bearing 84 is affixed to the device at a bearing support 12' which is integrally formed in one piece with the device 10. The shaft 82 is also journaled at the device 10 in a sleeve 86 and a sleeve 88. The shaft 82 is connected to an electric motor 94 via a transmission 92 and a drive shaft 90.

In Fig. 16 the angular tolerance between the sleeve 86 and the ball bearing 84 is less than 0.1°, since the inserts 12 used for the two components were fixed relative to one another on forming the wax pattern 45. Angular tolerances of less than 0.05° are achievable by means of the present teaching. Moreover, an axial tolerance of positioning between the inserts 12 of the sleeve 86 and of the ball bearing 84 is less than 0.1 mm, preferably less than 0.05 mm. Similarly a tolerance of positioning between the inserts 12 of the sleeve 86 and of the ball bearing 84 is less than 0.05 mm + 0.5 mm/m, preferably less than 0.05 mm + 0.2 mm/m.

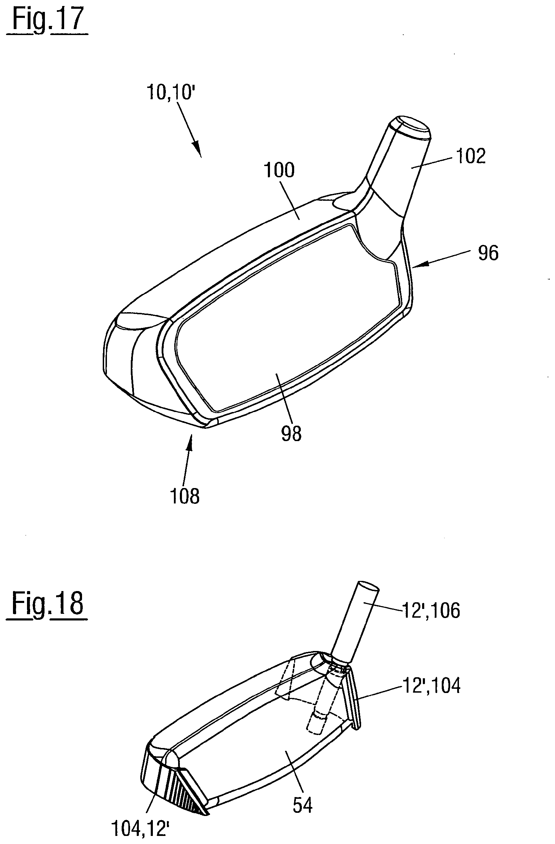

Fig. 17 shows the device 10 to be a head of a golf club 96. The head 96 comprises a front face 98 and a body 100. The head can be connected to a shaft (not shown) via a shaft connector 102 in a manner known per se.

Not shown in Fig. 17, but indicated in Fig. 18, two weights 104, for example formed by tungsten inserts, can be provided as inserts 12' at the wax pattern 54.

As also indicated in Fig. 18 a further insert 12' is embedded within the wax pattern 54. This further insert 12' is a shaft connector insert 106 which permits an accurate connection of the shaft at a pre-defined angle to the front face and a base 108 of the golf club 10'. In this way the angle between the shaft of the golf club and the front face can be reliably formed with an improved alignment quality in comparison to the prior art.

### List of reference numerals:

- 10, 10': device, golf club
- 12, 12': functional component, 12 formed by an insert
- 14: inner surface
- 16: housing
- 18, 18', 18": mold for a pattern, top half of 18, bottom half of 18
- 19: seal
- 20: a cavity
- 22: inner surface
- 24, 24': first kind of insert, second kind of insert
- 26: slider
- 28: magnet
- 30: vacuum passage
- 32: vacuum pump
- 34: vacuum port
- 36: vertical axis
- 38: reservoir of W
- 40: resin port
- 42: resin line
- 44: gas supply
- 46: gas port
- 48: gas line
- 50: seal
- 52: projection at 22
- 54, 54': pattern, hollow space of
- 56: outer surface of 54
- 58: recess at 56
- 60: first layer of fiber material
- 62: second layer of fiber material
- 64: further mold
- 66: reservoir of R
- 68: line of R
- 70: heating and cooling device
- 72: coupling of 70 to 64
- 74: further vacuum pump
- 76: vacuum port
- 78: vacuum line
- 80: aperture
- 82: shaft
- 84: ball bearing
- 86: sleeve
- 88: sleeve
- 90: drive shaft
- 92: transmission
- 94: electric motor
- 96: head of a golf club
- 98: front face
- 100: body
- 102: shaft connector
- 104: weight
- 106: shaft connector insert
- 108: base

- G: gas
- H: horizontal axis
- M: removable material
- R: resin
- V: Vacuum
- W: wax

## Claims

1. A method of forming a device (10) of composite material, the method comprising the steps of:
providing a mold (18) having an internal space forming a cavity (20) with an inner surface (22), the cavity (20) having a shape corresponding to an inner shape of the device (10) to be formed;
placing inserts (24, 24') at one or more pre-defined positions along said inner surface (22);
holding said inserts (24, 24') at said one or more positions;
introducing removable material (M) into said cavity (20) of said mold (18) to form a pattern (54) having the inserts (24, 24') fixed therein when said removable material (M) is in solid form; and
removing said pattern (54) having the inserts (24, 24') fixed therein from said mold (18),
wherein said step of introducing said removable material (M) into said mold (18) comprises filling between 40 and 99% of a volume of said cavity (20) with liquid removable material (M),
charcterized by further comprising the step of:
introducing gas (G) into said removable material (M) present in said mold (18) and pressurizing said removable material (M) present in said mold (18) with a pressure difference between an outside of said formed pattern (54) and a hollow space (54') within said pattern (54) selected in the range of 0.02 to 20 bar, and by further comprising the step of:
moving said mold (18) to completely coat the inner surface (22) of the mold (18) with said removable material (M) in liquid form; and
solidifying the removable material (M) in said mold (18).

2. A method according to claim 1,
wherein said step of holding comprises holding the inserts (24, 24') through the application of vacuum (V), the use of sliders (26), functional elements, and/or the use of magnets (28).

3. A method according to claim 1 or claim 2,
wherein said inserts (24, 24') comprise at least one of magnetic material and metal.

4. A method according to one of the preceding claims,
wherein said insert (24, 24') is shaped to form a functional component (12) or is a functional component (12') of said device (10).

5. A method according to one of the preceding claims,
wherein said pattern (54) of removable material (M) is produced in an injection molding process or a wax casting process.

6. A method according to one of claims 1 to 5,
further comprising the step of:
applying a pressure selected in the range of 0.02 to 0.95 bar, in particular 0.05 to 0.5 bar in said cavity (20) prior to the introduction of the removable material (M) into said cavity.

7. A method according to one of the preceding claims,
further comprising the step of:
covering said pattern (54) having the inserts (24, 24') with one or more layers of one or more kinds of fiber material (60, 62).

8. A method according to claim 7,
further comprising the step of:
placing said pattern (54) having inserts (24, 24') and covered with said one or more layers of fiber material (60, 62) into a further mold (64), especially further comprising the step of:
heating the further mold (64) to first, second and/or third temperatures in first, second and/or third temperature ranges.

9. A method according to at least one of claims 7 and 8,
further comprising the step of:
introducing a resin (R) into said further mold (64) prior to and/or during said step of heating of said further mold (64) to said first temperature optionally wherein a vacuum (V) is applied during said step of curing said resin (R),

10. A method according to at least one of claims 7 to 9,
further comprising the step of:
curing said resin (R) in said further mold (64) to form said device (10), wherein said step of curing comprises at least one of the application of heat and UV light.

11. A method according to at least one of claims 7 to 10,
wherein said step of the application of heat comprises heating said further mold (64) to said second temperature.

12. A method according to at least one of claims 8 to 11,
wherein said resin (R) is heated to below a curing temperature of said resin (R) on the introduction of said resin (R) into said further mold (64); and/or
wherein said resin (R) is one of a one-component resin (R), a two-component resin (R) comprising a hardener, and a multi-component resin (R) comprising one or several hardeners.

13. A method according to at least one of claims 8 to 12,
wherein the resin (R) comprises a resin on an epoxy basis, a resin on a polyurethane basis, a resin on a cyanate ester or another basis suitable for injection or infusion.

14. A method according to one of claims 7 to 13,
wherein said one or more layers of fiber material (60, 62) comprise carbon fibers, glass fibers, basalt fibers, natural fibers, such as wood fibers and hemp fibers, aramid fibers, polyester fibers in dry condition or as prepreg.

15. A method according to one of claims 8 to 14,
further comprising the step of:
removing said removable material (M) from said device (10); and/or further comprising the step of heating said further mold (64) to the third temperature.

## Patentansprüche

1. Verfahren zum Bilden einer Vorrichtung (10) aus Verbundmaterial, wobei das Verfahren die Schritte umfasst:
Bereitstellen einer Form (18), die einen Innenraum aufweist, der einen Hohlraum (20) mit einer inneren Oberfläche (22) bildet, wobei der Hohlraum (20) eine Gestalt aufweist, die einer inneren Gestalt der zu bildenden Vorrichtung (10) entspricht;
Platzieren von Einsätzen (24, 24') an einer oder mehreren vordefinierten Positionen entlang der inneren Oberfläche (22);
Halten der Einsätze (24, 24') an der einen oder den mehreren Positionen;
Einbringen von entfernbarem Material (M) in den Hohlraum (20) der Form (18), um ein Muster (54) zu bilden, das die darin fixierten Einsätze (24, 24') aufweist, wenn das entfernbare Material (M) in fester Form vorliegt; und Entfernen des Musters (54), das die darin fixierten Einsätze (24, 24') aufweist, aus der Form (18),
wobei der Schritt des Einbringens des entfernbaren Materials (M) in die Form (18) das Füllen von zwischen 40 und 99 % eines Volumens des Hohlraums (20) mit flüssigem entfernbarem Material (M) umfasst,
**dadurch gekennzeichnet, dass** es zudem den Schritt umfasst:
Einbringen von Gas (G) in das in der Form (18) vorhandene entfernbare Material (M) und Druckbeaufschlagen des in der Form (18) vorhandenen entfernbaren Materials (M) mit einer Druckdifferenz zwischen einer Außenseite des gebildeten Musters (54) und einem Hohlraum (54') innerhalb des Musters (54), die in dem Bereich von 0,02 bis 20 bar ausgewählt ist, und dadurch, dass
es zudem den Schritt umfasst:
Bewegen der Form (18), um die innere Oberfläche (22) der Form (18) vollständig mit dem entfernbaren Material (M) in flüssiger Form zu beschichten; und
Verfestigen des entfernbaren Materials (M) in der Form (18).

2. Verfahren nach Anspruch 1,
wobei der Schritt des Haltens das Halten der Einsätze (24, 24') durch die Anwendung von Vakuum (V), die Verwendung von Schiebern (26), Funktionselementen und/oder die Verwendung von Magneten (28) umfasst.

3. Verfahren nach Anspruch 1 oder 2,
wobei die Einsätze (24, 24') mindestens eines von magnetischem Material und Metall umfassen.

4. Verfahren nach einem der vorstehenden Ansprüche,
wobei der Einsatz (24, 24') geformt ist, um eine Funktionskomponente (12) zu bilden, oder eine Funktionskomponente (12') der Vorrichtung (10) ist.

5. Verfahren nach einem der vorstehenden Ansprüche,
wobei das Muster (54) aus entfernbarem Material (M) in einem Spritzgussverfahren oder einem Wachsgießverfahren hergestellt wird.

6. Verfahren nach einem der Ansprüche 1 bis 5,
welches zudem den Schritt umfasst:
Anwenden eines in dem Bereich von 0,02 bis 0,95 bar, insbesondere von 0,05 bis 0,5 bar, ausgewählten Drucks in dem Hohlraum (20) vor dem Einbringen des entfernbaren Materials (M) in den Hohlraum.

7. Verfahren nach einem der vorstehenden Ansprüche,
welches zudem den Schritt umfasst:
Abdecken des Musters (54), das die Einsätze (24, 24') aufweist, mit einer oder mehreren Schichten einer oder mehrerer Arten von Fasermaterial (60, 62).

8. Verfahren nach Anspruch 7,
welches zudem den Schritt umfasst:
Platzieren des Musters (54), das Einsätze (24, 24') aufweist und mit der einen oder den mehreren Schichten von Fasermaterial (60, 62) abgedeckt ist, in eine weitere Form (64), insbesondere
welches zudem den Schritt umfasst:
Erwärmen der weiteren Form (64) auf erste, zweite und/oder dritte Temperaturen in ersten, zweiten und/oder dritten Temperaturbereichen.

9. Verfahren nach mindestens einem der Ansprüche 7 und 8,
welches zudem den Schritt umfasst:
Einbringen eines Harzes (R) in die weitere Form (64) vor dem und/oder während des Schritts des Erwärmens der weiteren Form (64) auf die erste Temperatur, optional wobei während des Schritts des Aushärtens des Harzes (R) ein Vakuum (V) angewendet wird,

10. Verfahren nach mindestens einem der Ansprüche 7 bis 9,
welches zudem den Schritt umfasst:
Aushärten des Harzes (R) in der weiteren Form (64), um die Vorrichtung (10) zu bilden, wobei der Schritt des Aushärtens mindestens eines von der Anwendung von Wärme und UV-Licht umfasst.

11. Verfahren nach mindestens einem der Ansprüche 7 bis 10,
wobei der Schritt der Anwendung von Wärme das Erwärmen der weiteren Form (64) auf die zweite Temperatur umfasst.

12. Verfahren nach mindestens einem der Ansprüche 8 bis 11,
wobei das Harz (R) beim Einbringen des Harzes (R) in die weitere Form (64) auf unterhalb einer Aushärtetemperatur des Harzes (R) erwärmt wird; und/oder
wobei das Harz (R) eines von einem Einkomponentenharz (R), einem Zweikomponentenharz (R), das einen Härter umfasst, und einem Mehrkomponentenharz (R), das einen oder mehrere Härter umfasst, ist.

13. Verfahren nach mindestens einem der Ansprüche 8 bis 12,
wobei das Harz (R) ein Harz auf Epoxidbasis, ein Harz auf Polyurethanbasis, ein Harz auf Cyanatesterbasis oder einer anderen für Spritzgießen oder Eingießen geeigneten Basis umfasst.

14. Verfahren nach einem der Ansprüche 7 bis 13,
wobei die eine oder die mehreren Schichten von Fasermaterial (60, 62) Kohlenstofffasern, Glasfasern, Basaltfasern, Naturfasern, wie Holzfasern und Hanffasern, Aramidfasern, Polyesterfasern im trockenen Zustand oder als Prepreg umfassen.

15. Verfahren nach einem der Ansprüche 8 bis 14,
welches zudem den Schritt umfasst:
Entfernen des entfernbaren Materials (M) aus der Vorrichtung (10);
und/oder zudem den Schritt umfasst: Erwärmen der weiteren Form (64) auf die dritte Temperatur.

## Revendications

1. Procédé de formation d'un dispositif (10) en matériau composite, le procédé comprenant les étapes consistant à :
mettre à disposition un moule (18) ayant un espace interne formant une cavité (20) avec une surface intérieure (22), la cavité (20) ayant une forme correspondant à une forme intérieure du dispositif (10) à former ;
placer des inserts (24, 24') à une ou plusieurs positions prédéfinies le long de ladite surface intérieure (22) ;
maintenir lesdits inserts (24, 24') auxdites une ou plusieurs positions ;
introduire un matériau amovible (M) jusque dans ladite cavité (20) dudit moule (18) pour former un motif (54) ayant les inserts (24, 24') fixés à l'intérieur lorsque ledit matériau amovible (M) est sous forme solide ; et
retirer ledit motif (54) ayant les inserts (24, 24') fixés à l'intérieur dudit moule (18),
dans lequel ladite étape consistant à introduire ledit matériau amovible (M) jusque dans ledit moule (18) comprend de remplir entre 40 et 99 % d'un volume de ladite cavité (20) avec un matériau amovible (M) liquide,
**caractérisé en ce qu'**il comprend en outre l'étape consistant à :
introduire un gaz (G) jusque dans ledit matériau amovible (M) présent dans ledit moule (18) et mettre sous pression ledit matériau amovible (M) présent dans ledit moule (18) avec une différence de pression entre un extérieur dudit motif formé (54) et un espace creux (54') à l'intérieur dudit motif (54), choisie dans la plage de 0,02 à 20 bar, et
**en ce qu'**il comprend en outre les étapes consistant à :
déplacer ledit moule (18) pour revêtir complètement la surface intérieure (22) du moule (18) avec ledit matériau amovible (M) sous forme liquide ; et
solidifier le matériau amovible (M) dans ledit moule (18).

2. Procédé selon la revendication 1,
dans lequel ladite étape de maintien comprend de maintenir les inserts (24, 24') par l'application d'un vide (V), l'utilisation de coulisseaux (26), d'éléments fonctionnels et/ou l'utilisation d'aimants (28).

3. Procédé selon la revendication 1 ou la revendication 2,
dans lequel lesdits inserts (24, 24') comprennent l'un au moins d'un matériau magnétique et d'un métal.

4. Procédé selon l'une des revendications précédentes,
dans lequel ledit insert (24, 24') est conformé pour former un composant fonctionnel (12) ou est un composant fonctionnel (12') dudit dispositif (10).

5. Procédé selon l'une des revendications précédentes,
dans lequel ledit motif (54) en matériau amovible (M) est produit dans un procédé de moulage par injection ou un procédé de moulage de cire.

6. Procédé selon l'une des revendications 1 à 5,
comprenant en outre l'étape consistant à :
appliquer une pression choisie dans la plage de 0,02 à 0,95 bar, en particulier de 0,05 à 0,5 bar, dans ladite cavité (20) avant l'étape consistant à introduire le matériau amovible (M) jusque dans ladite cavité.

7. Procédé selon l'une des revendications précédentes,
comprenant en outre l'étape consistant à :
recouvrir ledit motif (54) ayant les inserts (24, 24') avec une ou plusieurs couches d'un ou plusieurs types de matériau fibreux (60, 62).

8. Procédé selon la revendication 7,
comprenant en outre l'étape consistant à :
placer ledit motif (54) ayant des inserts (24, 24') et recouvert desdites une ou plusieurs couches de matériau fibreux (60, 62) jusque dans un moule supplémentaire (64), en particulier comprenant en outre l'étape consistant à :
chauffer le moule supplémentaire (64) à des première, deuxième et/ou troisième températures dans des première, deuxième et/ou troisième plages de températures.

9. Procédé selon l'une au moins des revendications 7 et 8,
comprenant en outre l'étape consistant à :
introduire une résine (R) jusque dans ledit moule supplémentaire (64) avant et/ou pendant ladite étape consistant à chauffer ledit moule supplémentaire (64) à ladite première température, le cas échéant dans lequel un vide (V) est appliqué pendant ladite étape consistant à durcir ladite résine (R),

10. Procédé selon l'une au moins des revendications 7 à 9,
comprenant en outre l'étape consistant à :
durcir ladite résine (R) dans ledit moule supplémentaire (64) pour former ledit dispositif (10), ladite étape de durcissement comprenant l'une au moins d'une application de chaleur et de lumière UV.

11. Procédé selon au moins l'une des revendications 7 à 10,
dans lequel ladite étape d'application de chaleur comprend de chauffer ledit moule supplémentaire (64) à ladite deuxième température.

12. Procédé selon l'une au moins des revendications 8 à 11,
dans lequel ladite résine (R) est chauffée à une température inférieure à une température de durcissement de ladite résine (R) lors de l'introduction de ladite résine (R) jusque dans ledit moule supplémentaire (64) ; et/ou
dans lequel ladite résine (R) est l'une d'une résine monocomposant (R), d'une résine à deux composants (R) comprenant un durcisseur, et d'une résine à composants multiples (R) comprenant un ou plusieurs durcisseurs.

13. Procédé selon l'une au moins des revendications 8 à 12,
dans lequel la résine (R) comprend une résine à base d'époxy, une résine à base de polyuréthane, une résine à base d'ester de cyanate ou d'une autre base appropriée pour l'injection ou l'infusion.

14. Procédé selon l'une des revendications 7 à 13,
dans lequel lesdites une ou plusieurs couches de matériau fibreux (60, 62) comprennent des fibres de carbone, des fibres de verre, des fibres de basalte, des fibres naturelles, telles que des fibres de bois et des fibres de chanvre, des fibres d'aramide, des fibres de polyester à l'état sec ou sous forme de préimprégné.

15. Procédé selon l'une des revendications 8 à 14,
comprenant en outre l'étape consistant à :
retirer ledit matériau amovible (M) dudit dispositif (10) ; et/ou comprenant en outre l'étape consistant à chauffer ledit moule supplémentaire (64) à ladite troisième température.
